# EUROPÄISCHE PATENTSCHRIFT

(11) **EP 2 047 668 B1**
(45) Veröffentlichungstag und Bekanntmachung des Hinweises auf die Patenterteilung: **27.12.2017**
(21) Anmeldenummer: 07786146.6
(22) Anmeldetag: 18.07.2007
(51) Int. Cl.: H04M 3/487

(54) **VERFAHREN, SPRACHDIALOGSYSTEM UND TELEKOMMUNIKATIONSENDGERÄT ZUR MULTILINGUALEN SPRACHAUSGABE**
METHOD, SPOKEN DIALOG SYSTEM, AND TELECOMMUNICATIONS TERMINAL DEVICE FOR MULTILINGUAL SPEECH OUTPUT
PROCÉDÉ, SYSTÈME DE DIALOGUE VOCAL ET TERMINAL DE TÉLÉCOMMUNICATION POUR LA REPRODUCTION VOCALE MULTILINGUE

(30) Priorität: 19.07.2006 DE 102006033802
(43) Veröffentlichungstag der Anmeldung: 15.04.2009
(73) Patentinhaber: Deutsche Telekom AG, 53113 Bonn (DE)
(72) Erfinder: RUNGE, Fred, 15838 Wünsdorf (DE); LIEDTKE, Klaus-Dieter, 31582 Nienburg (DE); HARDT, Detlef, 30451 Hannover (DE); ECKERT, Martin, 12527 Berlin (DE); JOHANNSEN, Wiebke, 10961 Berlin (DE); ENGLERT, Roman, 53913 Swisttal (DE)
(74) Vertreter: Blumbach Zinngrebe
(86) Internationale Anmeldenummer: PCT/EP2007/006372
(87) Internationale Veröffentlichungsnummer: WO 2008/009429

(56) Entgegenhaltungen:
- EP-A2- 0 886 424
- US-A1- 2006 120 307
- US-B1- 6 816 468

## Beschreibung

Die Erfindung betrifft allgemein Sprachdialogsysteme und insbesondere ein Sprachdialogsystem, welches für eine multilinguale Sprachausgabe ausgebildet ist, ein mit einem solchen Sprachdialogsystem verbindbares Telekommunikationsendgerät sowie ein Verfahren zur Sprachausgabe eines solchen Sprachdialogsystems.

Der Einsatz von Sprachdialogsystemen ist in verschiedenen Bereichen heute üblich. So werden Sprachdialogsysteme heute beispielsweise zur Steuerung des Zugriffs auf Informationsdatenbanken oder zur Sprachsteuerung automatisierter Einrichtungen eingesetzt, sowie als Zugangseinrichtung für telefonische Auskunftssysteme oder Transaktionssysteme für Homebanking oder Teleshopping. Sprachdialogsysteme können allgemein als Hardware- oder Softwaresysteme oder eine Kombination davon bereitgestellt werden.

Der allgemeine Aufbau von Dialogsystemen, die der sprachlichen und analog der multimodalen Interaktion mit mindestens einem Nutzer dienen, ist beispielsweise aus "Introduction and Overview of W3C Speech Interface Framework", W3C Working Draft 4 December 2000 ("http://www.w3.org/TR/2000/WD-voice-intro-20001204/") bekannt. Monolinguale Sprachdialoganwendungen erfüllen nur unvollkommen die Anforderungen eines multilingualen Kundenkreises. Aus diesem Grund werden Sprachdialoganwendungen entwickelt, die unter Einsatz der Technologie der Sprachenidentifizierung (Language Identification) anhand einer ersten Äußerung des Anrufers die gesprochene Sprache feststellen, um möglichst im direkten Anschluss an die erste Äußerung Sprachausgaben und Spracherkennungsgrammatiken auf die entsprechende Sprache umzustellen. Dazu muss jedoch der Nutzer darauf hingewiesen werden, dass die Möglichkeit besteht, die Anwendung auch in einer anderen als der Basissprache zu nutzen.

Aus EP 0 886 424 A2 ist beispielsweise ein Verfahren und eine Vorrichtung zur automatischen Auswahl einer Sprache beaknnt, die für die Kommunikation zwischen einem Benutzer und einem multilingualen Telekommunikationssystem, wie beispielsweise einem Voicemail-System oder einem Internet-Server, verwendet werden soll. In Abhängigkeit einer Anruferkennung des Benutzers wird eine Sprache ausgewählt, in der dem Benutzer vom Telekommunikationssystem geantwortet wird, wobei eine Bestätigung der ausgewählten Sprache durch den Benutzer erwartet wird. Bestätigt der Benutzer die ausgewählte Sprache nicht, wird in Abhängigkeit der Anruferkennung eine weitere Sprache gemäß einer vorgegebenen Hierarchie ausgewählt. Wird vom Benutzer keine der angebotenen Sprache bestätigt, so wird eine Standardsprache wie zum Beispiel Englisch verwendet.

In US 2006/120307 A1 wird ein Videotelefonsystem und ein Verfahren zu dessen Betrieb beschrieben, bei welchem zur Übersetzung von Gesprächen zwischen Gesprächsteilnehmern, die unterschiedliche Sprachen sprechen, eine Übersetzung von einem Übersetzer durchgeführt wird, der dem Gespräch mittels einer Konferenzschaltung zugeschaltet ist. Um den Gesprächsablauf zu beschleunigen, können die Übersetzung und Äußerungen der Gesprächsteilnehmer überlappen. Zu diesem Zweck wird die vom jeweiligen Zuhörer nicht benötigte Sprachsequenz unterdrückt.

Eine übliche Verfahrensweise, um einen Nutzer auf die Möglichkeit hinzuweisen, eine Sprachanwendung in anderen als einer Hauptsprache zu nutzen, ist die Verlängerung eines einleitenden Sprachausgabeprompts um informative Aussagen, die ihn auf diese Möglichkeit hinweisen.

Ein ursprünglich monolingualer Sprachausgabeprompt in der Hauptsprache Deutsch, wie zum Beispiel "Hallo, hier ist Ihr Wettervorhersagedienst. Bitte nennen Sie den Ort für die Vorhersage." kann üblicherweise um mindestens eine Aussage in einer anderen Sprache erweitert werden, die für das genannte Beispiel folgendermaßen lauten könnte: System: "Hallo, hier ist Ihr Wettervorhersagedienst. Bitte nennen Sie den Ort für die Vorhersage. If you want to control this service in English, please say English. Bu servisi türk dilinde kullanmak istiyorsaniz, lütfen türkce söyleyiniz." oder "Hallo, hier ist Ihr Wettervorhersagedienst. Bitte nennen Sie den Ort für die Vorhersage. Please say the name of the city for the weather forecast".

Derartige Sprachausgaben können sowohl mit Hilfe aufgezeichneter Sprache, als auch über Sprachsynthese (Text-To-Speech; TTS) erzeugt werden. Moderne Text-To-Speech-Systeme verfügen dabei über Verfahren, um unter Adaption der Aussprache an phonetische Besonderheiten verschiedener Sprachen auch gemischt-sprachige, sequentielle Texte akustisch sequentiell wiederzugeben. Ein solches Verfahren ist beispielsweise aus "A General Approach to TTS Reading of Mixed-Language Texts" von L. Badino, C. Barolo und S. Quazza, Proc. of 5th ISCA Speech Synthesis Workshop, 2004.

In jedem Fall bedeutet die zusätzliche sequentiell folgende Informationsausgabe in einer anderen Sprache, im Folgenden auch als Nebensprache bezeichnet, eine wesentliche zeitliche Verlängerung eines Sprachprompts und führt damit ebenfalls zu einer Verlängerung der Zeit bis zum Erreichen des Dialogziels, was im Allgemeinen zu einer wesentlich geringeren Akzeptanz von Nutzern in der Hauptsprache, zum Beispiel Deutsch führt.

Der vorliegenden Erfindung liegt daher die Aufgabe zugrunde, einen verbesserten Weg zum Bereitstellen einer multilingualen Sprachausgabe eines automatisierten Sprachdialogsystems aufzuzeigen, durch den insbesondere die oben beschriebenen Nachteile beseitigt oder zumindest reduziert werden.

Weitere Aufgabe der Erfindung ist es, einen fremdsprachigen Nutzer eines multilingualen Sprachdialogsystems möglichst früh auf die Möglichkeit hinzuweisen, in seiner Landessprache sprechen zu können, wobei gleichzeitig die Nutzung einer entsprechenden Sprachanwendung und die Verständlichkeit in einer ausgewählten Hauptsprache durch zusätzliche fremdsprachige Informationen nur wenig beeinträchtigt werden.

Diese Aufgabe wird durch ein Verfahren gemäß Anspruch 1, ein Sprachdialogsystem gemäß Anspruch 10 sowie ein Telekommunikationsendgerät nach Anspruch 17 gelöst.

Vorteilhafte Ausführungsformen und Weiterbildungen sind in den jeweiligen Unteransprüchen umschrieben.

Dementsprechend umfasst ein erfindungsgemäßes Verfahren zur multilingualen Sprachausgabe eines automatisierten Sprachdialogsystems das Aufbauen einer Verbindung zwischen einem Telekommunikationsendgerät und dem Sprachdialogsystem, und, in Antwort auf den Verbindungsaufbau, das Bereitstellen einer multilingualen Sprachausgabe, welche die Ausgabe einer ersten Sprachsequenz in einer ersten Sprache und wenigstens einer zweiten Sprachsequenz in wenigstens einer zweiten, von der ersten unterschiedlichen Sprache umfasst, wobei die erste und die wenigstens eine zweite Sprachsequenz zumindest teilweise zeitgleich ausgegeben werden.

Die Sprachausgabe wird vorzugsweise, beispielsweise als Sprachausgabeprompt, auf dem Telekommunikationsendgerät ausgegeben. Die Sprache des Nutzers des Telekommunikationsendgerätes wird dann in der Regel in Abhängigkeit der ersten Äußerung des Nutzers erkannt und als Grundlage für weitere Sprachausgaben sowie beispielsweise für zu verwendende Spracherkennungsgrammatiken verwendet.

Bei der Erstellung einer multilingualen Sprachapplikation mit automatischer Klassifikation der Sprache des Nutzers stellt sich die Frage, wie der Anrufer motiviert werden kann, frei in seiner Muttersprache zu sprechen. Da die Klassifizierung der gesprochenen Sprache grundsätzlich auf Basis der ersten Nutzeräußerung durchgeführt wird, muss der Anrufer bereits mit Hilfe des Begrüßungsprompts auf die Möglichkeit der Multilingualität hingewiesen werden. Im Gegensatz zu mehrsprachigen Ländern wie zum Beispiel der Schweiz oder auch Kanada spielt diese Frage in Deutschland eine große Rolle, da wahrscheinlich kein Anrufer in einem deutschen Sprachportal vermutet, Fremdsprachen nutzen zu können, sofern kein Hinweis auf diese Möglichkeit gegeben wird.

Hierbei ist zu beachten, dass einerseits die Anrufer in der Haupt- bzw. Basissprache wie zum Beispiel Deutsch - die mit ca. 90 % die Mehrheit der Anrufer in Deutschland ausmacht - nicht in ihrem Komfort beeinträchtigt wird und andererseits möglichst schnell und transparent ein Hinweis auf die Multilingualität - die Nutzung des Systems in einer Nebensprache - gegeben wird.

Durch das erfindungsgemäße Verfahren wird vorteilhaft ermöglicht, einem fremdsprachigen Nutzer einer Sprachdialoganwendung mitzuteilen, dass er mit der Anwendung auch in einer anderen Sprache als der Hauptsprache, d.h. in einer Nebensprache, kommunizieren kann, ohne dass sequentiell erklärende Sprachausgaben in mehreren Sprachen ausgegeben werden müssen und ohne dass für die Nutzung der Anwendung mehrere Zugriffsadressen und/oder -nummern, wie zum Beispiel Rufnummern, entsprechend für jede Sprache vereinbart werden müssen.

Bei Einsatz der Erfindung ist es daher zum Beispiel nicht erforderlich, die Zeitdauer eines monolingualen Sprachausgabeprompts um die Dauer jeder einzelnen zusätzlichen Ansage zu verlängern, welche zum Beispiel jeweils einen zusätzlichen Hinweis zur Nutzungsmöglichkeit in einer Fremdsprache enthält.

Vielmehr umfasst das Verfahren besonders vorteilhaft das Erzeugen einer multilingualen Ausgabe-Sprachsequenz durch Mischen der ersten und der wenigstens einen zweiten Sprachsequenz.

Ferner unterscheiden sich die erste und die wenigstens eine zweite Sprachsequenz vorzugsweise in wenigstens einer Signaleigenschaft, insbesondere in Lautstärke, Ansagestimme, Sprechgeschwindigkeit, Sprachstil, Intonation, Toneffekt und/oder Frequenzspektrum.

Zu diesem Zweck wird vorteilhaft wenigstens eine Signaleigenschaft der ersten und/oder der wenigstens einen zweiten Sprachsequenz vor dem Mischen angepasst.

Die Erfinder haben erkannt, dass für eine multilinguale Sprachausgabe ein dem sogenannten "Cocktail-Party-Effekt" ähnlicher Effekt ausgenutzt werden kann. Der Effekt besteht in der menschlichen Fähigkeit, in einem Gewirr verschiedener Gespräche ein bestimmtes Gespräch zielgerichtet zu erfassen, welches über andere Signaleigenschaften verfügt. Entsprechend kann in einem Gewirr von gleichzeitigen Sprachausgaben in einer Fremdsprache ein Hinweis in der Muttersprache zielgerichtet erfasst werden.

Die parallele Ausgabe von Sprachprompts in einer Hauptsprache und in verschiedenen Nebensprachen mit Zusatzinformationen unter Ausnutzung von Effekten ähnlich dem Cocktail-Party-Effekt, ermöglicht es, zusätzliche Hinweise über die mögliche Nutzung anderer Sprachen für mindestens eine gegebene Sprachdialoganwendung ohne wesentliche Beeinträchtigung von Nutzern in der Hauptsprache zu geben. Somit kann eine wesentliche Verlängerung des entsprechenden Prompts in der Hauptsprache und eine damit verbundene Verschlechterung der Akzeptanz verhindert werden.

Je nach Ausgestaltung der Erfindung erfolgt das Erzeugen der multilingualen Ausgabe-Sprachsequenz vorzugsweise im Sprachdialogsystem und/oder im Telekommunikationsendgerät.

In einer vorteilhaften Ausführungsform des Verfahrens werden zum Bereitstellen der multilingualen Sprachausgabe die erste und die wenigstens eine zweite Sprachsequenz vom Sprachdialogsystem zum Telekommunikationsendgerät übertragen, durch Benutzereingaben an dem Telekommunikationsendgerät wird wenigstens eine Sprache ausgewählt und wenigstens eine empfangene Sprachsequenz wird über einen vorbestimmten Ausgabekanal des Telekommunikationsendgerätes in Abhängigkeit der ausgewählten Sprache ausgegeben. Ein entsprechender vorbestimmter Ausgabekanal ist beispielsweise der rechte oder linke Kanal eines für Stereoausgabe ausgebildeten Endgerätes.

Um zu bestimmen ob das Telekommunikationsendgerät, welches eine Verbindung mit dem Sprachdialogsystem aufgebaut hat, dazu ausgebildet ist, mehrere Sprachsequenzen gleichzeitig zu empfangen, Sprachsequenzen zu mischen und/oder ausgewählte, gegebenenfalls gemischte Sprachsequenzen über einen von mehreren vorbestimmten Ausgabekanälen auszugeben, wird vorzugsweise eine Identifikation vom Endgerät zum Sprachdialogsystem übertragen. Die Identifikation kann vorteilhaft selbst Informationen über die Funktionalitäten des Endgerätes umfassen. Alternativ gibt die Identifikation den Endgerätetyp an, dessen Funktionalität mit Hilfe einer entsprechenden Datenbank bestimmt wird, die eine Zuordnungstabelle zur Zuordnung von Endgerätetyp und entsprechender Funktionalität umfasst und auf die das Sprachdialogsystem zugreifen kann.

Das Sprachdialogsystem weist vorteilhaft wenigstens einen ersten und einen zweiten Betriebsmodus auf, wobei der Betriebsmodus automatisch in Abhängigkeit der von dem Telekommunikationsendgerät empfangenen Identifikation ausgewählt wird.

Vorzugsweise werden im ersten Betriebsmodus die erste und die wenigstens eine zweite Sprachsequenz mittels eines Mischsystems zu einer Ausgabe-Sprachsequenz gemischt und zu einem verbundenen Telekommunikationsendgerät übertragen, wobei im zweiten Betriebsmodus die erste und die wenigstens eine zweite Sprachsequenz parallel zu einem verbundenen Telekommunikationsendgerät übertragen werden.

Typischerweise wird das Sprachdialogsystem zur Sprachsteuerung eines Dienstes wie zum Beispiel einem automatischen Auskunftsdienst eingesetzt. Dementsprechend umfasst das Verfahren ferner vorteilhaft das Übermitteln einer Sprachäußerung eines Benutzers von dem Telekommunikationsendgerät zu dem Sprachdialogsystem, das Ermitteln eines Steuerbefehls durch Ausführen einer Spracherkennung der empfangenen Sprachäußerung durch das Sprachdialogsystem, und das automatische Ausführen einer vorbestimmten Aktion durch das Sprachdialogsystem in Abhängigkeit des ermittelten Steuerbefehls.

Ein erfindungsgemäßes Sprachdialogsystem ist vorzugsweise über ein Telekommunikationsnetz mit wenigstens einem Telekommunikatiosendgerät verbindbar und dazu ausgebildet, eine multilinguale Sprachausgabe zu bewirken. Zu diesem Zweck umfasst das Sprachdialogsystem eine Kontrolleinheit zum Steuern des Sprachdialogsystems, eine Eingabeeinheit zum Registrieren und Auswerten von Nutzereingaben, eine Ausgabeeinheit zur Ausgabe wenigstens einer Sprachsequenz und Mittel zum Bewirken der multilingualen Sprachausgabe, welche die Ausgabe einer ersten Sprachsequenz in einer ersten Sprache und wenigstens einer zweiten Sprachsequenz in wenigstens einer zweiten, von der ersten unterschiedlichen Sprache umfasst, wobei die Ausgabe der ersten und der wenigstens einen zweiten Sprachsequenz zumindest teilweise zeitgleich erfolgt.
Ein erfindungsgemäßes Sprachdialogsystem kann vollständig oder teilweise, d.h. in einzelnen Modulen auf einem Telekommunikationsendgerät implementiert sein.

Die Mittel zum Bewirken der multilingualen Sprachausgabe umfassen vorzugsweise ein Mischsystem zum Mischen der ersten und der wenigstens einen zweiten Sprachsequenz. Zum Variieren wenigstens einer Signaleigenschaft der ersten und/oder zweiten Sprachsequenz umfasst das Mischsystem vorteilhaft entsprechende Mittel, die vorzugsweise dazu ausgebildet sind, Lautstärke, Ansagestimme, Sprechgeschwindigkeit, Sprachstil, Intonation, Toneffekt und/oder Frequenzspektrum einer Sprachsequenz anzupassen.

In einer vorteilhaften Ausführungsform eines Sprachdialogsystems werden dem Mischsystem die zu mischenden Sprachsequenzen als Text zugeführt und vom Mischsystem in entsprechende Audiosequenzen umgewandelt. In dieser Ausführungsform ist das Mischsystem vorzugsweise als TTS-System ausgebildet.

In einer weiteren vorteilhaften Ausführungsform, bei der ein Mischen von Sprachsequenzen auf einem Endgerät vorgesehen sein kann, umfassen die Mittel zum Bewirken der multilingualen Sprachausgabe Mittel zum parallelen Übertragen der ersten und der wenigstens einen zweiten Sprachsequenz zu einem verbundenen Telekommunikationsendgerät.

Dementsprechend ist das Sprachdialogsystem vorteilhaft für einen ersten Betriebsmodus ausgebildet, in welchem die erste und die wenigstens eine zweite Sprachsequenz mittels des Mischsystems zu einer Ausgabe-Sprachsequenz gemischt und zu einem verbundenen Telekommunikationsendgerät übertragen werden, sowie für einen zweiten Betriebsmodus, in welchem die erste und die wenigstens eine zweite Sprachsequenz parallel zu einem verbundenen Telekommunikationsendgerät übertragen werden. In dieser Ausführungsform umfasst das Sprachdialogsystem vorzugsweise einen Speicher mit einer darin gespeicherten Zuordnungstabelle, die der Zuordnung von Endgerätetypen zu dem ersten oder zweiten Betriebsmodus dient, wobei das Sprachdialogsystem zur automatischen Aktivierung des ersten oder zweiten Betriebsmodus in Abhängigkeit einer von dem Endgerät empfangenen Identifikation, welche den jeweiligen Endgerätetyp identifiziert, ausgebildet ist.

Ein erfindungsgemäßes Telekommunikationsendgerät ist zum parallelen Empfang wenigstens zweier separater Sprachsequenzen in unterschiedlichen Sprachen ausgebildet und umfasst eine Benutzerschnittstelle zum Auswählen wenigstens einer Sprache durch Benutzereingaben und Mittel zum Ausgeben wenigstens einer empfangenen Sprachsequenz über einen vorbestimmten Ausgabekanal des Telekommunikationsendgerätes in Abhängigkeit der ausgewählten Sprache.

Das Telekommunikationsendgerät umfasst vorzugsweise Mittel zum Mischen von Sprachsequenzen, wobei diese vorteilhaft dazu ausgebildet sind, wenigstens zwei Sprachsequenzen derart zu mischen, dass die Sprachsequenzen zumindest teilweise zeitlich überlappen. Auf diese Weise können beispielsweise jeweils eine von mindestens zwei zeitlich überlagerten Sprachsequenzen in unterschiedlichen Sprachen über den rechten und linken Ausgabekanal eines zur Stereoausgabe und/oder weitere Ausgabekanäle eines zur Mehrkanalausgabe (mindestens Stereoausgabe) ausgebildeten Telekommunikationsendgerätes ausgegeben werden. Alternativ können aber auch auf dem Endgerät Sprachsequenzen in unterschiedlichen Sprachen zu einer Ausgabe-Sprachsequenz, bei der die einzelnen Sprachsequenzen zeitlich überlappen, gemischt und über den einzigen oder einen ausgewählten Ausgabekanal des Endgerätes ausgegeben werden.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig. 1: eine schematische Darstellung einer ersten bevorzugten Ausführungsform eines Sprachdialogsystems mit separatem Mischsystem,
- Fig. 2: eine schematische Darstellung einer zweiten bevorzugten Ausführungsform eines Sprachdialogsystems mit integriertem Mischsystem,
- Fig. 3: eine schematische Darstellung einer dritten bevorzugten Ausführungsform eines Sprachdialogsystems, bei welchem das Mischsystem als TTS-System ausgebildet ist, und
- Fig. 4: eine schematische Darstellung einer zeitlichen Überlagerung von Sprachsequenzen in unterschiedlichen Sprachen.

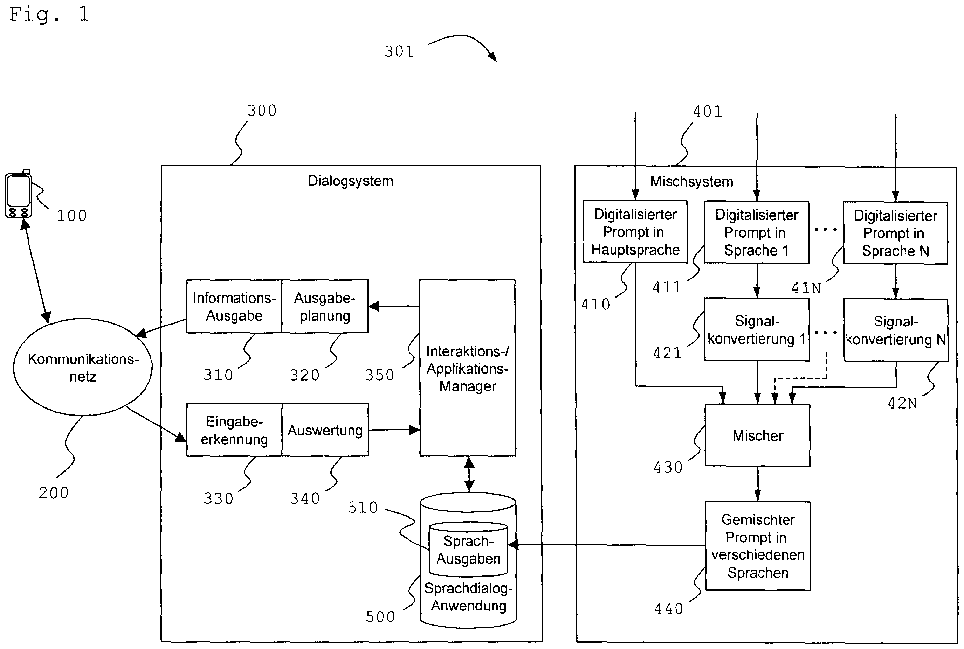

In Fig. 1 ist schematisch eine bevorzugte Ausführungsform eines Sprachdialogsystems 301 dargestellt, welches dazu dient, eine automatisierte Sprachdialoganwendung auszuführen, wenn ein Telekommunikationsendgerät 100 über ein entsprechendes Kommunikationsnetz 200 eine Verbindung zum Sprachdialogsystem 301 aufbaut. Je nach Einsatzzweck kann das Endgerät 100 beispielsweise als Telefon, Smartphone oder PDA ausgebildet sein und gegebenenfalls einen Browser zur Bedienung durch den Nutzer aufweisen. Das Kommunikationsnetz 200 kann dementsprechend beispielsweise als Telefonnnetz, Mobilfunknetz oder als WAN/LAN ausgebildet sein und drahtgebundene oder drahtlose Verbindungen unterstützen.

Die in Fig. 1 dargestellte Ausführungsform umfasst ein Dialogsystem 300, dem von einem separaten Mischsystem 401 Sprachausgaben 510 zugeführt werden. Das Mischsystem 401 kann insbesondere als Offline-Mischsystem vorgesehen sein und muss daher nicht mit dem Dialogsystem 300 verbunden sein, wenn das Endgerät 100 eine Verbindung zu dem Dialogsystem 300 aufbaut.

Die Auswertung von Nutzereingaben erfolgt im Dialogsystem 300 mittels einer Einheit zur Eingabeerkennung 330 und einer nachfolgenden Auswerteeinheit 340. Die ausgewerteten Nutzereingaben werden einem Interaktions- und/oder Applikationsmanager 350 zugeleitet. In Abhängigkeit der Nutzereingaben und der im Speicher 500 gespeicherten Sprachdialoganwendung steuert der Manager 350 die Ausgabeplanung 320. Die der Ausgabeplanungs-Einheit 320 nachfolgende Informationsausgabe-Einheit 310 generiert die Ausgabedaten, die über das Kommunikationsnetz 200 an das Endgerät 100 des Nutzers übermittelt werden.

Zur Eingabeerkennung und Informationsausgabe des Dialogsystems 300 werden vorzugsweise entsprechende Eingabe- und Ausgabegrammatiken eingesetzt. Eine Grammatik bezeichnet dabei eine strukturierte Beschreibung möglicher auszuwertender Eingaben durch einen Nutzer oder durch das Datenverarbeitungssystem selbst. Beispiele möglicher Nutzereingaben sind gesprochene Sprache, Texteingaben, Eingaben mittels eines Griffels über ein Touchscreen oder mittels einer Kamera aufgenommene Gesichtsmimik eines Nutzers. Vom System bereitgestellte Ausgaben sind zum Beispiel Textzeichenfolgen in Dokumenten, aufgezeichnete Sprache oder Multimediadateien. Eine Grammatik stellt eine Form eines Medienmodells dar und umfasst vorzugsweise ein Modell zur Beschreibung der Reihenfolge, in der Eingaben wie zum Beispiel Wörter von einem Medienerkenner wie zum Beispiel einem Spracherkenner erwartet werden und/oder in der Ausgaben mit bestimmten Informationsgehalten generiert werden.

Ein Kerngedanke der Erfindung besteht darin, dass während der Begrüßung in der Hauptsprache, beispielsweise Deutsch, parallel, gleichzeitig hörbar eine Aufforderung zur Nutzung einer oder mehrerer Nebensprachen, d.h. Fremdsprachen in Relation zu Deutsch, in der jeweiligen Fremdsprache gespielt wird. Diese Aufforderung wird im Hintergrund des deutschsprachigen Begrüßungsprompts, zum Beispiel um einige dB im Lautstärkepegel abgesenkt, gespielt.

Als Basissprache oder Hauptsprache wird eine vorgegebene Sprache einer Sprachdialoganwendung bezeichnet, in der diese vorzugsweise von der Zielgruppe genutzt wird. Als Nebensprache hingegen wird eine zusätzliche Sprache einer Sprachdialoganwendung bezeichnet, die neben der Hauptsprache ebenfalls von einem Teil der Zielgruppe gesprochen und innerhalb des Systems genutzt werden kann. Der Begriff Prompt oder Sprachprompt bezeichnet eine akustische Sprachausgabe von Informationen. Der Begriff Sprache bezeichnet allgemein ein Kommunikationssystem, das der Verständigung mittels eines Systems von Symbolen dient. In diesem Dokument bezieht sich dieser Begriff vorzugsweise auf gesprochene Sprache.

Dabei wird ein dem sogenannten "Cocktail-Party-Effekt" ähnlicher Effekt ausgenutzt. Der Effekt besteht in der menschlichen Fähigkeit, in einem Gewirr verschiedener Gespräche ein bestimmtes Gespräch zielgerichtet zu erfassen, welches über andere Signaleigenschaften verfügt. Entsprechend kann in einem Gewirr von gleichzeitigen Sprachausgaben in einer Fremdsprache ein Hinweis in der Muttersprache zielgerichtet erfasst werden. Übertragen auf das Szenario des multilingualen Portals bedeutet dies, dass dem nicht-muttersprachlichen Anrufer der im Begrüßungsprompt "versteckte" Hinweis auf die Nutzung der Muttersprache direkt "ins Ohr springt" und er somit dazu animiert wird, in seiner eigenen Muttersprache fortzufahren. Hierbei kann zum Beispiel der Hinweis im Hintergrund so formuliert werden, dass er als direkte Aufforderung verstanden wird, beispielsweise "Wie kann ich Ihnen helfen?".

Die Erfinder haben erkannt, dass eine Person bei gemischter, gleichzeitiger, d.h. nicht ausschließlich sequenzieller, Ausgabe von mindestens zwei Sprachprompts in unterschiedlichen Sprachen den Informationsgehalt bestimmter dazu gemischter, sich überlagernder Prompts in der Muttersprache oder Hauptsprache extrahieren und gleichzeitig Sprachausgaben in teilweise unverständlichen Fremdsprachen ignorieren kann. Dieser monaurale Effekt kommt dem bekannten binauralen Cocktail-Party-Effekt nahe, bei dem eine Lokalisierung der Schallquelle notwendig ist. In beiden Effekten wird jedoch auch die Möglichkeit des Gehörs ausgenutzt, Störgeräusche, in diesem Fall die Stimme einer fremden, überwiegend unbekannten Nebensprache, durch Kenntnis von erwarteten Signaleigenschaften und Lautkombinationen auszufiltern.

Bei einer Mischung von Prompts verschiedener Sprachen wird vorteilhaft die Unterscheidbarkeit der gemischten Promptansagen in den einzelnen Sprachen zusätzlich dadurch erhöht, dass die einzelnen Ansagen mit unterschiedlichen Signaleigenschaften versehen werden. Zu diesem Zweck werden die Ansagen entweder vorbereitend, beispielsweise während der Aufzeichnung, oder durch die eingesetzte Technologie während der Wiedergabe mit verschiedenen Signaleigenschaften versehen.

In der in Fig. 1 dargestellten Ausführungsform werden die Ansagen vorbereitend mit verschiedenen Signaleigenschaften versehen und als Sprachausgaben im Speicher 500 abrufbereit gespeichert. Zu diesem Zweck ist ein separates Offline-Mischsystem 401 vorgesehen, dem ein digitalisierter Sprachprompt 410 in einer Hauptsprache, wie zum Beispiel Deutsch, sowie N weitere digitalisierte Sprachprompts 411 bis 41N in jeweils unterschiedlichen Nebensprachen, wie zum Beispiel Englisch, Türkisch oder Französisch, zugeführt werden. Im dargestellten Ausführungsbeispiel werden die Signaleigenschaften der in den Nebensprachen bereitgestellten Sprachprompts 411 bis 41N mittels zugeordneter Module 421 bis 42N zur Signalkonvertierung variiert und mittels des Mischers 430 zusammen mit dem Sprachprompt in der Hauptsprache zu einem gemischten Prompt 440 in verschiedenen Sprachen gemischt. Der gemischte Prompt 440 wird zur Verwendung durch das Dialogsystem 300 als Sprachausgabe 510 im Speicher 500 gespeichert.

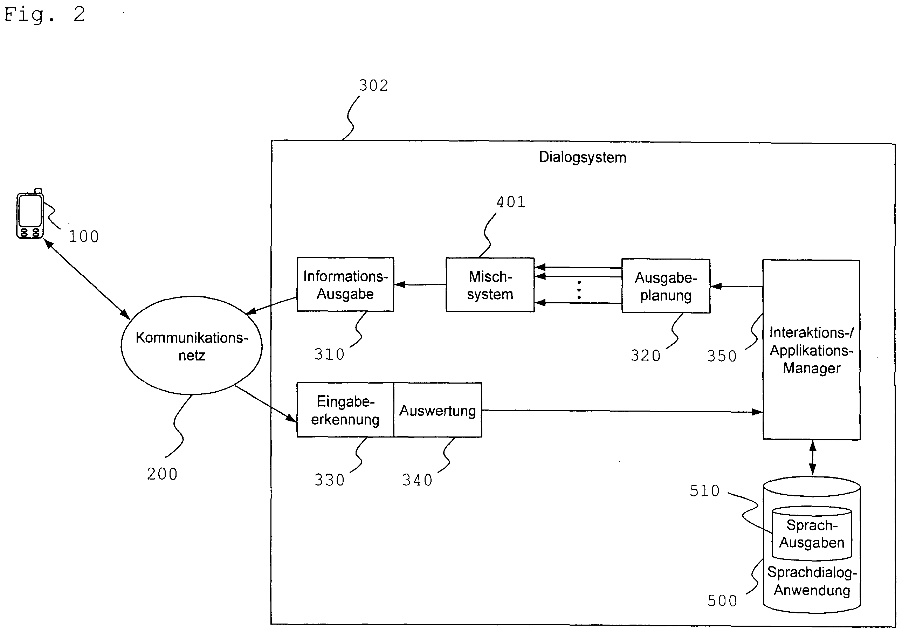

In dem in Fig. 2 dargestellten Ausführungsbeispiel erfolgt eine Promptmischung während der Laufzeit, d.h. während das Endgerät 100 mit dem Dialogsystem 302 über das Kommunikationsnetz 200 verbunden ist. Zu diesem Zweck ist das Mischsystem 401 in das Dialogsystem 302 integriert, wobei es zwischen der Ausgabeplanung 320 und der Informationsausgabe 310 angeordnet ist. Vorzugsweise werden dem Mischsystem 401 in dieser Ausführungsform digitalisierte Sprachprompts 510 in unterschiedlichen Sprachen zugeführt, die im Speicher 500 hinterlegt sind. Der Aufbau des Mischsystems 401 entspricht dabei im Wesentlichen dem des in Fig. 1 dargestellten Mischsystems 401.

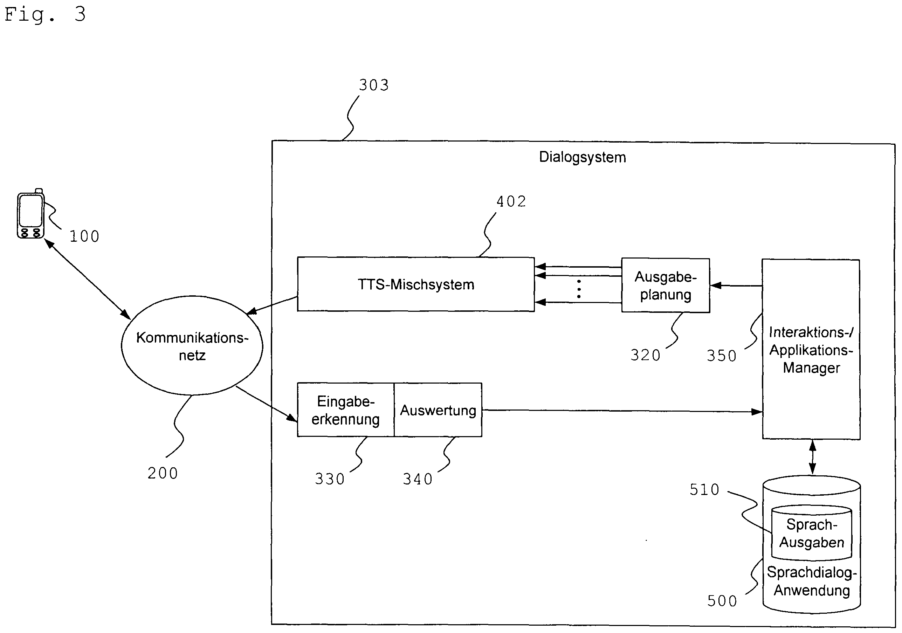

Bei dem in Fig. 3 dargestellten Ausführungsbeispiel ist ein TTS-Mischsystem 402 vorgesehen, welches der Ausgabeplanung 320 nachgeschaltet ist. Das TTS-Mischsystem 402 ist dazu ausgebildet, aus empfangenen Texten in unterschiedlichen Sprachen einen gemischten Sprachprompt zu erzeugen. Das TTS-Mischsystem 402 umfasst vorzugsweise mindestens ein Sprachsynthesesystem, welches das Mischen verschiedener Eingabetexte, gegebenenfalls unter Modifizierung von Signaleigenschaften der Sprachausgaben, für die verschiedenen Texte selbstständig vornimmt. In der dargestellten Ausführungsform übernimmt das TTS-Mischsystem 402 außerdem die Funktion der Informationsausgabe, eine zusätzliche Ausgabeeinheit 310 wie in Fig. 2 dargestellt wird daher nicht benötigt. Die Ansagen in unterschiedlichen Sprachen, welche in diesem Ausführungsbeispiel als Texte 510 im Speicher 500 hinterlegt sind, werden dem TTS-Mischsystem 402 von der Ausgabeplanung 320, gesteuert durch den Applikations-Manager 350 zugeführt.

Jedes der Mischsystem 401 und 402 umfasst Einheiten zur Signalkonvertierung, mittels derer die Signaleigenschaften der verschiedensprachigen Sprachprompts angepasst werden können. Die Signaleigenschaften der verschiedenen Eingangsprompts können bei Bedarf zum Beispiel durch ein oder mehrere der folgenden Verfahren bzw. Anpassungen modifiziert werden:
- Anwendung verschiedener Stimmen, zum Beispiel durch Einsatz verschiedener Sprecher bei der Aufzeichnung der zu mischenden Prompts bzw. Anwendung verschiedener Stimmen in Text-To-Speech Systemen,
- Unterschiedliche Dehnung und/oder Stauchung des Frequenzspektrums der verschiedenen zu mischenden Ansagen,
- Unterschiedliche Sprechgeschwindigkeiten der verschiedenen zu mischenden Ansagen,
- Unterschiedliche selektive Ausfilterung verschiedener Teilspektren der verschiedenen zu mischenden Ansagen mit gegebenenenfalls unterschiedlichen Filtercharakteristiken,
- Unterschiedliche Veränderung der spektralen Eigenschaften der verschiedenen zu mischenden Ansagen,
- Einsatz von signalmanipulierenden Effekten, wie Echo, Delay, Hall oder Chorus,
- Veränderung des Sprachstils, zum Beispiel als Gesang,
- Intonation,
- Unterschiedliche Audiountermalung, zum Beispiel Musik, oder
- Unterschiedliche Lautstärken der verschiedenen zu mischenden Ansagen.

Um eine Verringerung der Akzeptanz der Nutzer der Sprachdialoganwendung, welche diese Anwendung in ihrer Mehrheit in einer Hauptsprache benutzen, zu minimieren, ist es besonders vorteilhaft, die Prompts anderer Sprachen, d.h. der Nebensprachen, in einer geringeren Lautstärke, d.h. mit einem Pegelverhältnis < 1 im Verhältnis zum Pegel der Hauptsprache bzw. Basissprache, abzuspielen.

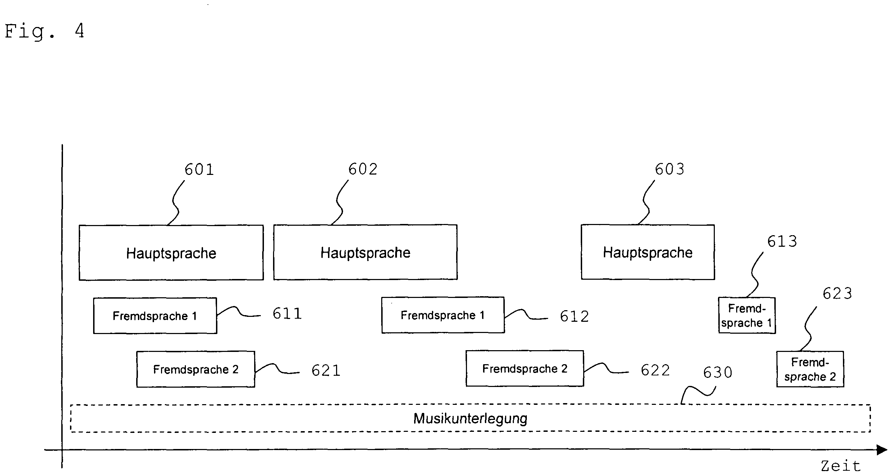

In Fig. 4 ist ein Beispiel für eine zeitliche Verteilung der Überlagerung mehrerer Sprachprompts dargestellt, wobei Texte in verschiedenen Sprachen während der Laufzeit durch mindestens ein Sprachausgabesystem nicht sequentiell, wie im Stand der Technik beschrieben, sondern parallel, gemischt und gegebenenfalls mit unterschiedlichen Signaleigenschaften versehen, ausgegeben werden. Dargestellt sind Sprachsequenzen 601 bis 603 in einer Hauptsprache wie zum Beispiel Deutsch, mit denen zeitlich überlappend Sprachsequenzen 611 bis 613 in einer ersten Nebensprache wie zum Beispiel Englisch und Sprachsequenzen 621 bis 623 in einer zweiten Nebensprache wie zum Beispiel Türkisch ausgegeben werden. Im dargestellten Beispiel ist ferner eine Musikunterlegung 630 vorgesehen.

Für eine solche Ausgabe überlagerter Sprachprompts kann jedes der in den Figuren 1 bis 3 dargestellten Sprachdialogsysteme 301 bis 303 eingesetzt werden. Es können auch mehrere unterschiedliche Ausgabesysteme für aufgezeichnete Sprache und/oder TTS-Systeme in beliebiger Kombination genutzt werden, welche die einzelnen parallelen Ausgaben gegebenenfalls mit unterschiedlichen Signaleigenschaften versehen und deren Ausgaben parallel auf denselben Ausgabekanal geschaltet sind.

Neben dem Mischen von Sprachausgaben mit Hinweisen auf die Nutzungsmöglichkeit in verschiedenen Sprachen besteht eine weitere Ausführungsform der Erfindung im Einsatz zusätzlicher Ausgabemodi des Endgerätes. Zum Bestimmen der Funktionalität des Endgerätes durch das Sprachdialogsystem überträgt das Endgerät vorzugsweise bei Verbindungsaufbau eine Identifikation, welche entweder direkt Informationen über die Funktionalität bzw. die Ausgabemodi des Endgerätes umfasst oder den Endgerätetyp identifiziert. Abhängig vom Endgerätetyp kann das Sprachdialogsystem verfügbare Ausgabemodi beispielsweise aus einer entsprechenden Datenbank auslesen.

Falls das Endgerät des Nutzers über entsprechende Möglichkeiten verfügt, werden auf dem Display des Endgerätes bei Anwahl eines multilingualen Sprachdialogdienstes Hinweise zur möglichen Nutzung in anderen Sprachen ausgegeben, die durch zusätzliche kurze Audio- und/oder Sprachausgaben in angemessener Lautstärke während der Kommunikation mit einem Sprachdialogdienst direkt auf dem Endgerät unterstützt werden können. Eine kurze Audioausgabe kann dabei beispielsweise als Hinweiston vorgesehen sein. In einer vorteilhaften Ausführungsform kann nach Ausgabe der Optionen für unterschiedliche Sprachen auf dem Endgerät die gewünschte Sprache auch durch manuelle Bedienhandlungen eingestellt werden.

Mit Telekommunikationsendgeräten, die mit entsprechenden Dekodierverfahren ausgestattet sind, kann grundsätzlich über mehrere Sprachkanäle gleichzeitig kommuniziert werden, da bei ausreichender Bandbreite Daten virtuell über mehrere Kanäle übertragen werden können. Damit können vorteilhaft sprachliche Zusatzinformation und/oder Sprachausgaben für weitere unterschiedliche Sprachen über verschiedene Kanäle übertragen werden. Ein Mischen der Ausgaben, wie oben beschrieben, kann in diesem Fall auch erst auf dem Endgerät erfolgen. Die Möglichkeit der Steuerung der Kanäle durch den Applikationsserver wird dadurch nicht beeinflusst.

Durch mindestens eine Bedienhandlung des Nutzers, zum Beispiel über ein seitlich angebrachtes Steuerrad, kann ferner vorteilhaft von einer Standardbehandlung, zum Beispiel Mischen, der einzelnen Ausgaben bzw. Kanäle auf getrennte gleichzeitige und/oder selektive Einzelübertragung oder Einzelausgabe und/oder Mischen bestimmter Kanäle umgeschaltet werden.

Eine getrennte gleichzeitige Ausgabe kann zum Beispiel unter Verwendung einer Stereo- oder Mehrkanalausgabefunktionalität über den entsprechenden rechten und linken oder weitere akustisch lokalisierbare Kanäle erfolgen, eine selektive Einzelausgabe entsprechend über den rechten oder linken oder weitere akustisch lokalisierbare Kanäle. Ist die Anzahl der zur Verfügung stehenden, zur Lokalisierung über das Gehör geeigneten Ausgabekanäle größer als die Anzahl der anzubietenden Sprachen, so ist ein Mischen der Sprachausgaben in verschiedenen Sprachen nicht unbedingt erforderlich, wenn die einzelnen Informationen parallel zum Endgerät übertragen werden können. Ansonsten wird die Signalkonvertierung 421..42N dazu genutzt, den einzelnen akustischen Informationen der Sprachprompts 410..41N über bekannte Verfahren z.B. unterschiedliche räumliche Positionen zuzuweisen.

Ein erfindungsgemäß ausgestattetes multilinguales Sprachportal, welches zur Identifizierung der Sprache des Anrufers ausgebildet ist und zum Beispiel Deutsch als Hauptsprache verwendet, ermöglicht besonders vorteilhaft eine Kanalisierung nicht deutschsprachiger Anrufer, da beispielsweise eine Weiterleitung zu einem muttersprachigen Berater direkt möglich ist. Dadurch kann eine höhere Kundenzufriedenheit, ein Imagegewinn und eine Senkung der Auflegerquote erreicht werden.

### Bezugszeichen

- 100: Mobiles oder stationäres Telekommunikationsendgerät, zum Beispiel Festnetztelefon, Mobiltelefon, PDA, MDA, oder ähnliches
- 200: Daten-, Sprach- und/oder Übertragungsnetz für Einund Ausgaben
- 300: Dialogsystem
- 301-303: Sprachdialogsystem
- 401: Mischsystem
- 402: TTS-Mischsystem
- 310: Informationsausgabe, zum Beispiel für aufgezeichnete Sprache, Sprachsynthese, Displayanzeigen, Audiosignale oder Gerätevibration
- 320: Ausgabeplanung
- 330: Eingabeerkennung
- 340: Auswertungs-/ Interpretationsmodul für Eingaben
- 350: Interaktions- und/oder Applikationsmanagement
- 410: Digitalisierter Prompt in der Haupt- bzw. Basissprache
- 411-41N: Digitalisierter Prompt in der Neben- bzw. Fremdsprache 1 bis N
- 421-42N: Signalkonvertierung 1 bis N
- 430: Mischer/Mixer
- 440: Gemischter Prompt in verschiedenen Sprachen
- 500: Speicher mit gespeicherter Sprachdialoganwendung
- 510: Gespeicherte Sprachausgaben, beispielsweise in Form von aufgezeichneter Sprache und/oder Text
- 601-603: Sprachsequenzen in der Haupt- bzw. Basissprache
- 611-613: Sprachsequenzen in der Neben- bzw. Fremdsprache 1
- 621-623: Sprachsequenzen in der Neben- bzw. Fremdsprache 2
- 630: Musikunterlegung

## Patentansprüche

1. Verfahren zur multilingualen Sprachausgabe eines automatisierten Sprachdialogsystems (301, 302, 303), an einen Nutzer, umfassend die Schritte
- Aufbauen einer Verbindung zwischen einem Telekommunikationsendgerät (100) und dem Sprachdialogsystem (301, 302, 303),
- in Antwort auf den Verbindungsaufbau Bereitstellen einer multilingualen Sprachausgabe, welche die Ausgabe einer ersten Sprachsequenz (410) in einer ersten Sprache und wenigstens einer zweiten Sprachsequenz (411-41N) in wenigstens einer zweiten, von der ersten unterschiedlichen Sprache umfasst, **dadurch gekennzeichnet, dass** die erste und die wenigstens eine zweite Sprachsequenz zumindest teilweise zeitgleich ausgegeben werden, derart, dass der Informationsgehalt der ersten und der wenigstens einen zweiten Sprachsequenz vom Nutzer extrahiert werden kann.

2. Verfahren nach Anspruch 1, umfassend das Erzeugen einer multilingualen Ausgabe-Sprachsequenz (440) durch Mischen der ersten (410) und der wenigstens einen zweiten (411-41N) Sprachsequenz.

3. Verfahren nach Anspruch 2, wobei sich die erste und die wenigstens eine zweite Sprachsequenz in wenigstens einer Signaleigenschaft, insbesondere in Lautstärke, Ansagestimme, Sprechgeschwindigkeit, Sprachstil, Intonation, Toneffekt, räumliche Wahrnehmung und/oder Frequenzspektrum, unterscheiden.

4. Verfahren nach Anspruch 3, wobei wenigstens eine Signaleigenschaft der ersten und/oder der wenigstens einen zweiten Sprachsequenz vor dem Mischen angepasst wird.

5. Verfahren nach einem der Ansprüche 2 bis 4, wobei das Erzeugen der multilingualen Ausgabe-Sprachsequenz (440) im Sprachdialogsystem (301, 302, 303) erfolgt.

6. Verfahren nach einem der Ansprüche 2 bis 4, wobei das Erzeugen der multilingualen Ausgabe-Sprachsequenz im Telekommunikationsendgerät (100) erfolgt.

7. Verfahren nach einem der vorstehenden Ansprüche, wobei zum Bereitstellen der multilingualen Sprachausgabe
- die erste und die wenigstens eine zweite Sprachsequenz vom Sprachdialogsystem (301, 302, 303) zum Telekommunikationsendgerät (100) übertragen werden,
- durch Benutzereingaben an dem Telekommunikationsendgerät (100) wenigstens eine Sprache ausgewählt wird und
- wenigstens eine empfangene Sprachsequenz über einen vorbestimmten Ausgabekanal des Telekommunikationsendgerätes (100) in Abhängigkeit der ausgewählten Sprache ausgegeben wird.

8. Verfahren nach einem der vorstehenden Ansprüche, umfassend das Übertragen einer Identifikation von dem Telekommunikationsendgerät (100) zu dem Sprachdialogsystem (301, 302, 303), wobei das Sprachdialogsystem wenigstens einen ersten und einen zweiten Betriebsmodus aufweist und der Betriebsmodus automatisch in Abhängigkeit der empfangenen Identifikation ausgewählt wird.

9. Verfahren nach Anspruch 8, wobei im ersten Betriebsmodus die erste (410) und die wenigstens eine zweite (412-41N) Sprachsequenz im Sprachdialogsystem (301, 302, 303) zu einer Ausgabe-Sprachsequenz (440) gemischt und zu einem verbundenen Telekommunikationsendgerät (100) übertragen werden, und im zweiten Betriebsmodus die erste und die wenigstens eine zweite Sprachsequenz parallel zu einem verbundenen Telekommunikationsendgerät (100) übertragen werden.

10. Sprachdialogsystem (301, 302, 303), verbindbar mit wenigstens einem Telekommunikatiosendgerät (100) über ein Telekommunikationsnetz (200), dazu ausgebildet, eine multilinguale Sprachausgabe an einen Nutzer zu bewirken, umfassend
- eine Kontrolleinheit (350) zum Steuern des Sprachdialogsystems,
- eine Eingabeeinheit (330, 340) zum Registrieren und Auswerten von Nutzereingaben,
- eine Ausgabeeinheit (310) zur Ausgabe wenigstens einer Sprachsequenz, und
- Mittel zum Bewirken der multilingualen Sprachausgabe, welche die Ausgabe einer ersten Sprachsequenz (410) in einer ersten Sprache und wenigstens einer zweiten Sprachsequenz (411-41N) in wenigstens einer zweiten, von der ersten unterschiedlichen Sprache umfasst, **dadurch gekennzeichnet, dass** die Ausgabe der ersten und der wenigstens einen zweiten Sprachsequenz zumindest teilweise zeitgleich erfolgt, derart, dass der Informationsgehalt der ersten und der wenigstens einen zweiten Sprachsequenz vom Nutzer extrahiert werden kann.

11. Sprachdialogsystem nach Anspruch 10, wobei die Mittel zum Bewirken der multilingualen Sprachausgabe ein Mischsystem (401, 402) zum Mischen der ersten und der wenigstens einen zweiten Sprachsequenz umfassen.

12. Sprachdialogsystem nach Anspruch 10 oder 11, wobei das Mischsystem (401, 402) Mittel (421-42N) zum Variieren wenigstens einer Signaleigenschaft der ersten und zweiten Sprachsequenzen umfasst.

13. Sprachdialogsystem nach einem der vorstehenden Ansprüche, wobei das Mischsystem als TTS-System (403) ausgebildet ist.

14. Sprachdialogsystem nach einem der vorstehenden Ansprüche, wobei die Mittel zum Bewirken der multilingualen Sprachausgabe Mittel zum parallelen Übertragen der ersten und der wenigstens einen zweiten Sprachsequenz zu einem verbundenen Telekommunikationsendgerät (100) umfassen.

15. Sprachdialogsystem nach einem der vorstehenden Ansprüche, ausgebildet für einen ersten Betriebsmodus, in welchem die erste (410) und die wenigstens eine zweite (412-41N) Sprachsequenz mittels des Mischsystems (401, 402) zu einer Ausgabe-Sprachsequenz (440) gemischt und zu einem verbundenen Telekommunikationsendgerät übertragen werden, und für einen zweiten Betriebsmodus, in welchem die erste und die wenigstens eine zweite Sprachsequenz parallel zu einem verbundenen Telekommunikationsendgerät übertragen werden.

16. Sprachdialogsystem nach Anspruch 15, umfassend einen Speicher mit einer darin gespeicherten Zuordnungstabelle, die der Zuordnung von Endgerätetypen zu dem ersten oder zweiten Betriebsmodus dient, wobei das Sprachdialogsystem zur automatischen Aktivierung des ersten oder zweiten Betriebsmodus in Abhängigkeit einer von einem Telekommunikationsendgerät (100) empfangenen Identifikation ausgebildet ist.

17. Telekommunikationsendgerät, verbindbar mit einem Sprachdialogsystem nach einem der Ansprüche 10 bis 16, ausgebildet zum parallelen Empfang wenigstens zweier separater Sprachsequenzen in unterschiedlichen Sprachen von dem Sprachdialogsystem, umfassend
- eine Benutzerschnittstelle zum Auswählen wenigstens einer Sprache durch Benutzereingaben und
- Mittel zum Ausgeben wenigstens einer empfangenen Sprachsequenz über einen vorbestimmten Ausgabekanal des Telekommunikationsendgerätes in Abhängigkeit der ausgewählten Sprache.

18. Telekommunikationsendgerät nach Anspruch 17, umfassend Mittel zum Mischen von Sprachsequenzen.

19. Telekommunikationsendgerät nach Anspruch 18, wobei die Mittel zum Mischen dazu ausgebildet sind, wenigstens zwei Sprachsequenzen derart zu mischen, dass die Sprachsequenzen zumindest teilweise zeitlich überlappen.

## Claims

1. A method for multilingual voice output of an automated voice dialog system (301, 302, 303) to a user, comprising the steps of
- establishing a connection between a telecommunication terminal (100) and the voice dialog system (301, 302, 303);
- in response to the connection establishment, providing a multilingual voice output comprising the output of a first speech sequence (410) in a first language and of at least one second speech sequence (411 - 41N) in at least one second language that is different from the first language;
**characterized in that** the first and the at least one second speech sequences are outputted at least partially at the same time such that the information content of the first and the at least one second speech sequences can be extracted by the user.

2. The method according to claim 1, comprising generating a multilingual output speech sequence (440) by mixing the first (410) and the at least one second (411 - 41N) speech sequences.

3. The method according to claim 2, wherein the first and the at least one second speech sequences differ in at least one signal characteristic, in particular volume, announcement voice, rate of speech, style of speech, intonation, sound effect, spatial perception, and/or frequency spectrum.

4. The method according to claim 3, wherein at least one signal characteristic of the first and/or the at least one second speech sequences is adapted prior to the mixing.

5. The method according to any one of claims 2 to 4,
wherein the generating of the multilingual output speech sequence (440) occurs in the voice dialog system (301, 302, 303).

6. The method according to any one of claims 2 to 4,
wherein the generating of the multilingual output speech sequence occurs in the telecommunication terminal (100).

7. The method according to any one of the preceding claims, wherein for providing the multilingual voice output
- the first and the at least one second speech sequences are transmitted from the voice dialog system (301, 302, 303) to the telecommunication terminal (100);
- at least one language is selected by user inputs on the telecommunication terminal (100); and
- at least one received speech sequence is outputted via a predetermined output channel of the telecommunication terminal (100), in dependence of the selected language.

8. The method according to any one of the preceding claims, comprising transmitting an identifier from the telecommunication terminal (100) to the voice dialog system (301, 302, 303), wherein the voice dialog system includes at least a first and a second operating mode, and wherein the operating mode is selected automatically in response to the received identifier.

9. The method according to claim 8, wherein, in the first operating mode, the first (410) and the at least one second (412 - 41N) speech sequences are mixed in the voice dialog system (301, 302, 303) into an output speech sequence (440) and are transmitted to a connected telecommunication terminal (100); and wherein, in the second operating mode, the first and the at least one second speech sequences are transmitted in parallel to a connected telecommunication terminal (100).

10. A voice dialog system (301, 302, 303), connectable to at least one telecommunication terminal (100) via a telecommunications network (200), adapted to effect a multilingual voice output to a user, comprising
- a control unit (350) for controlling the voice dialog system;
- an input unit (330, 340) for recording and evaluating user inputs;
- an output unit (310) for outputting at least one speech sequence; and
- means for effecting the multilingual speech output, comprising the output of a first speech sequence (410) in a first language and of at least one second speech sequence (411 - 41N) in at least one second language that is different from the first language; **characterized in that** the output of the first and the at least one second speech sequences occurs at least partially at the same time such that the information content of the first and the at least one second speech sequences can be extracted by the user.

11. The voice dialog system according to claim 10, wherein the means for effecting the multilingual speech output comprise a mixing system (401, 402) for mixing the first and the at least one second speech sequences.

12. The voice dialog system according to claim 10 or 11, wherein the mixing system (401, 402) comprises means (421 - 42N) for varying at least one signal characteristic of the first and second speech sequences.

13. A voice dialog system according to any one of the preceding claims, wherein the mixing system is a TTS system (403).

14. The voice dialog system according to any one of the preceding claims, wherein the means for effecting the multilingual voice output comprise means for simultaneously transmitting the first and the at least one second speech sequences to a connected telecommunication terminal (100).

15. The voice response system according to any one of the preceding claims, configured for a first operating mode in which the first (410) and the at least one second (412 - 41N) speech sequences are mixed, by the mixing system (401, 402), into an output speech sequence (440) and are transmitted to a connected telecommunication terminal; and for a second operating mode in which the first and the at least one second speech sequences are simultaneously transmitted to a connected telecommunication terminal.

16. The voice dialog system according to claim 15, comprising a memory with an association table stored therein, which is used for associating terminal device types with the first or second operating mode, wherein the voice dialog system is configured for automatically enabling the first or second operating mode in response to an identifier received from a telecommunication terminal (100).

17. A telecommunication terminal, connectable to a voice dialog system according to any one of claims 10 to 16, configured for simultaneously receiving at least two separate speech sequences in different languages from the voice response system, comprising
- a user interface for selecting at least one language through user inputs; and
- means for outputting at least one received speech sequence over a predefined output channel of the telecommunication terminal in dependence of the selected speech.

18. The telecommunication terminal according to claim 17, comprising means for mixing speech sequences.

19. The telecommunication terminal according to claim 18, wherein the means for mixing are adapted to mix at least two speech sequences in a manner so that the speech sequences at least partially overlap in time.

## Revendications

1. Procédé de reproduction vocale multilingue d'un système de dialogue vocal automatisé (301, 302, 303) à destination d'un utilisateur, comprenant les étapes suivantes :
- installer une connexion entre un terminal de télécommunication (100) et le système de dialogue vocal (301, 302, 303),
- en réponse à l'installation de la connexion, mettre à disposition une reproduction vocale multilingue, laquelle reproduction comprend une première séquence vocale (410) dans une première langue et au moins une deuxième séquence vocale (411-41N) dans au moins une deuxième langue différente de la première, **caractérisé en ce que** la première et l'au moins une deuxième séquence vocale sont reproduites au moins en partie simultanément, de telle manière que le contenu informatif de la première et de l'au moins une deuxième séquence vocale peut être extrait par l'utilisateur.

2. Procédé selon la revendication 1, comprenant la production d'une séquence vocale multilingue de reproduction (440) par mixage de la première séquence vocale (410) et de l'au moins une deuxième séquence vocale (411-41N).

3. Procédé selon la revendication 2, dans lequel la première séquence vocale et l'au moins une deuxième séquence vocale se distinguent par au moins une propriété de signal, en particulier par l'intensité sonore, la voix, le débit de parole, la manière de parler, l'intonation, l'effet sonore, la perception spatiale et/ou le spectre des fréquences.

4. Procédé selon la revendication 3, dans lequel au moins une propriété de signal de la première et/ou de l'au moins une deuxième séquence vocale est adaptée avant le mixage.

5. Procédé selon l'une quelconque des revendications 2 à 4, dans lequel la production de la séquence vocale de reproduction multilingue (440) est réalisée dans le système de dialogue vocal (301, 302, 303).

6. Procédé selon l'une quelconque des revendications 2 à 4, dans lequel la production de la séquence vocale de reproduction multilingue est réalisée dans le terminal de télécommunication (100).

7. Procédé selon l'une quelconque des revendications précédentes, dans lequel pour mettre à disposition la reproduction vocale multilingue :
- la première et l'au moins une deuxième séquence vocale sont transmises du système de dialogue vocal (301, 302, 303) à l'appareil de télécommunication (100),
- au moins une langue est sélectionnée par l'intermédiaire d'entrées d'utilisateur sur l'appareil de télécommunication (100) et
- au moins une séquence vocale reçue est reproduite par l'intermédiaire d'un canal de reproduction prédéfini de l'appareil de télécommunication (100) en fonction de la langue sélectionnée.

8. Procédé selon l'une quelconque des revendications précédentes, comprenant la transmission d'une identification de l'appareil de télécommunication (100) au système de dialogue vocal (301, 302, 303), dans lequel le système de dialogue vocal comprend au moins un premier et un deuxième mode de fonctionnement et le mode de fonctionnement est sélectionné automatiquement en fonction de l'identification reçue.

9. Procédé selon la revendication 8, dans lequel la première séquence vocale (410) et l'au moins une deuxième séquence vocale (412-41N), dans le premier mode de fonctionnement, sont mixées dans le système de dialogue vocal (301, 302, 303) pour obtenir une séquence vocale de reproduction (440) et transmises à un appareil de télécommunication (100) connecté, et, dans le deuxième mode de fonctionnement, la première et l'au moins une deuxième séquence vocale sont transmises en parallèle à un appareil de télécommunication (100) connecté.

10. Système de dialogue vocal (301, 302, 303) pouvant être connecté à au moins un appareil de télécommunication (100) par l'intermédiaire d'un réseau de télécommunication (200), conçu pour réaliser une reproduction vocale multilingue à destination d'un utilisateur,
comprenant :
- une unité de contrôle (350) pour la commande du système de dialogue vocal,
- une unité d'entrée (330, 340) pour l'enregistrement et l'évaluation d'entrées d'utilisateur,
- une unité de reproduction (310) pour la reproduction d'au moins une séquence vocale, et
- des moyens pour la réalisation de la reproduction vocale multilingue, laquelle reproduction comprend une première séquence vocale (410) dans une première langue et au moins une deuxième séquence vocale (411-41N) dans au moins une deuxième langue différente de la première, **caractérisé en ce que** la reproduction de la première et de l'au moins une deuxième séquence vocale est réalisée au moins en partie simultanément, de telle manière que le contenu informatif de la première séquence vocale et de l'au moins une deuxième séquence vocale peut être extrait par l'utilisateur.

11. Système de dialogue vocal selon la revendication 10, dans lequel les moyens pour la réalisation de la reproduction vocale multilingue comportent un système de mixage (401, 402) pour le mixage de la première et de l'au moins une deuxième séquence vocale.

12. Système de dialogue vocal selon la revendication 10 ou 11, dans lequel le système de mixage (401, 402) comporte des moyens (421-42N) pour la modification d'au moins une propriété de signal des première et deuxième séquences vocales.

13. Système de dialogue vocal selon l'une quelconque des revendications précédentes, dans lequel le système de mixage est réalisé sous la forme d'un système TTS (403).

14. Système de dialogue vocal selon l'une quelconque des revendications précédentes, dans lequel les moyens pour la réalisation de la reproduction vocale multilingue comprennent des moyens pour la transmission en parallèle de la première et l'au moins une deuxième séquence vocale à un appareil de télécommunication (100) connecté.

15. Système de dialogue vocal selon l'une quelconque des revendications précédentes, conçu pour un premier mode de fonctionnement, dans lequel la première séquence vocale (410) et l'au moins une deuxième séquence vocale (412-41N) sont mixées au moyen du système de mixage (401, 402) pour obtenir une séquence vocale de reproduction (440) et transmises à un appareil de télécommunication connecté, et, pour un deuxième mode de fonctionnement, dans lequel la première et l'au moins une deuxième séquence vocale sont transmises en parallèle à un appareil de télécommunication connecté.

16. Système de dialogue vocal selon la revendication 15, comprenant une mémoire dans laquelle est stockée une table d'affectation, laquelle sert à affecter les types de terminal au premier ou au deuxième mode de fonctionnement, le système de dialogue vocal étant conçu pour activer automatiquement le premier ou le deuxième mode de fonctionnement en fonction d'une identification reçue par un terminal de télécommunication (100).

17. Terminal de télécommunication, pouvant être connecté à un système de dialogue vocal selon l'une quelconque des revendications 10 à 16, pour la réception en parallèle d'au moins deux séquences vocales séparées en différentes langues du système de dialogue vocal, comprenant :
- une interface utilisateur pour la sélection d'au moins une langue par l'intermédiaire d'entrées d'utilisateur et
- des moyens pour la reproduction d'au moins une séquence vocale reçue par l'intermédiaire d'un canal de reproduction prédéfini de l'appareil de télécommunication en fonction de la langue sélectionnée.

18. Appareil de télécommunication selon la revendication 17, comprenant des moyens pour le mixage de séquences vocales.

19. Appareil de télécommunication selon la revendication 18, dans lequel les moyens pour le mixage sont conçus pour mixer au moins deux séquences vocales, de telle manière que les séquences vocales se chevauchent au moins en partie dans le temps.
